Europäisches Patentamt

European Patent Office

Office européen des brevets

(11) Numéro de publication : **0 489 623 A1**

# (12) DEMANDE DE BREVET EUROPEEN

(21) Numéro de dépôt : **91403209.9**

(22) Date de dépôt : **27.11.91**

(51) Int. Cl.$^5$ : **H05B 33/04,** H05B 33/20, H05B 33/22, C09K 11/02

---

(30) Priorité : **03.12.90 FR 9015091**

(43) Date de publication de la demande : **10.06.92 Bulletin 92/24**

(84) Etats contractants désignés : **AT BE CH DE DK ES GB GR IT LI LU NL SE**

(71) Demandeur : **L'EQUIPEMENT ET LA CONSTRUCTION ELECTRIQUE en abrégé E.C.E. Société dite : 157, rue Pelleport F-75020 Paris (FR)**

(72) Inventeur : **Susset, Serge Emile Eugène 125 rue Albert Charrier, Boisragon F-79260 La Créche (FR)**

(74) Mandataire : **Barnay, André François Cabinet Barnay 80 rue Saint-Lazare F-75009 Paris (FR)**

---

(54) **Lampe électroluminescente.**

(57)     L'invention propose une source lumineuse électroluminescente du type comportant une couche électroluminescente et une couche diélectrique dans laquelle est incorporé un matériau hydrophile, pour fixer par absorption sélective l'eau contenue dans la source, tel que notamment de l'aluminosilicate de sodium ou de potassium sous forme pulvérulente mélangée à la substance active de la couche électromuminescente ou au matériau isolant diélectrique.

    L'invention trouve plus particulièrement à s'appliquer pour la réalisation d'une lampe souple électroluminescente.

EP 0 489 623 A1

La présente invention concerne une source lumineuse électroluminescente.

L'invention concerne notamment une lampe électroluminescente souple du type comportant au moins une couche électroluminescente et une couche de matériau diélectrique.

Une lampe électroluminescente souple est généralement constituée par l'empilage de plusieurs couches de matériaux qui comprennent notamment une couche constituant une électrode transparente, une couche de substance sensible électroluminescente et une couche diélectrique.

La lampe comporte également au moins deux électrodes pour appliquer au condensateur électroluminescent un champ électrique alternatif.

La couche de substance active électroluminescente, également appelée "phosphore électroluminescent" est généralement réalisée sous la forme de grains de dimension inférieure à 40 microns qui sont dispersés dans un liant organique.

La couche diélectrique peut également être réalisée sous la forme d'un matériau isolant diélectrique en poudre qui est dispersé dans un liant organique.

On appelle demi-durée de vie d'une lampe électroluminescente, le temps au bout duquel, lorsque la lampe est alimentée de manière continue, sa luminance est devenue égale à la moitié de sa luminance initiale.

La demi-durée de vie d'une lampe est caractéristique de son vieillissement.

Le vieillissement d'une lampe électroluminescente dépend entre autres facteurs, de l'humidité.

L'humidité qui influe sur le vieillissement de la lampe est la résultante de l'humidité contenue dans la lampe au moment de sa fabrication et de l'humidité qui traverse les parois de la lampe et atteignent la couche de substance active électroluminescente.

En effet, dans le cas d'une lampe souple, les parois de la lampe sont par exemple réalisées en polychlorotrifluoroéthylène qui n'est pas entièrement imperméable à l'eau.

L'action néfaste de l'humidité sur la durée de vie de la lampe est d'autant plus rapide que la température est élevée et, bien entendu, que le taux d'hygrométrie ambiant est important.

L'invention a pour but de proposer une source lumineuse électroluminescente dont la durée de vie soit augmentée de manière importante par rapport aux sources lumineuses électroluminescentes de l'état de la technique.

A cet effet, l'invention propose une source lumineuse caractérisée en ce qu'elle comporte un matériau hydrophile pour fixer par absorption sélective l'eau contenue dans la source.

Selon l'invention, le matériau hydrophile est un matériau pulvérulent à base d'aluminosilicate de sodium et/ou d'aluminosilicate de potassium.

Il est possible d'incorporer le matériau hydrophile à la couche électroluminescente et/ou à la couche de matériau isolant diélectrique.

Dans le premier cas, la couche électroluminescente est réalisée à partir d'une substance sensible se présentant sous forme de grains dispersés dans un liant organique, l'aluminosilicate de sodium ou de potassium étant incorporé à la substance active dans une proportion comprise entre 5 et 30% en poids, l'aluminosilicate pulvérulent se présentant sous la forme de grains dont la taille est inférieure à 10 microns.

De même, lorsque le matériau hydrophile est incorporé à la couche de matériau diélectrique, cette dernière est réalisée à partir d'un matériau isolant diélectrique se présentant sous forme de poudre dispersée dans un liant organique et l'aluminosilicate de sodium ou de potassium est incorporé au matériau diélectrique dans la même proportion comprise entre 5% et 30% en poids.

L'utilisation d'un aluminosilicate de sodium ou de potassium comme matériau hydrophile ne modifie en rien les caractéristiques électriques et optiques de la lampe.

Par contre, la durée de vie d'une telle lampe est multipliée par 1,5 à 2 fois du fait de l'introduction du matériau hydrophile.

A titre d'exemple, on constate qu'une lampe de l'état de la technique utilisée en ambiance chaude à 55°C et humide à 98% d'humidité relative voit sa luminance réduite de plus de 70% de sa valeur initiale après 240 heures de fonctionnement.

Après un même temps d'utilisation et dans les mêmes conditions, une lampe électroluminescente souple dans laquelle a été incorporé un aluminosilicate de sodium ou de potassium a une luminance qui est encore égale ou supérieure à 60% de sa valeur initiale.

## Revendications

1. Source lumineuse électroluminescente, notamment du type lampe électroluminescente souple, comportant au moins une couche électroluminescente et une couche de matériau diélectrique, caractérisée en ce qu'elle comporte un matériau hydrophile incorporé à la substance active et/ou au matériau diélectrique pour fixer par absorption sélective l'eau contenue dans la source.

2. Source lumineuse selon la revendication 1, caractérisée en ce que le matériau hydrophile est un matériau pulvérulent à base d'aluminosilicate.

3. Source lumineuse selon la revendication 2, caractérisée en ce que le matériau hydrophile est de l'aluminosilicate de sodium.

4. Source lumineuse selon la revendication 2, caractérisée en ce que le matériau hydrophile est de l'aluminosilicate de potassium.

5. Source lumineuse selon l'une quelconque des revendications 2 à 4, caractérisée en ce que la couche électroluminescente est réalisée à partir d'une substance sensible se présentant sous forme de grains dispersés dans un liant organique, et en ce que le matériau pulvérulent hydrophile est incorporé à la substance active.

6. Source lumineuse selon l'une quelconque des revendications 2 à 5, caractérisée en ce que la couche diélectrique est réalisée à partir d'un matériau isolant diélectrique se présentant sous forme de poudre dispersée dans un liant organique et en ce que le matériau hydrophile pulvérulent est incorporé au matériau diélectrique.

7. Source lumineuse selon l'une des revendications 5 ou 6, caractérisée en ce que le matériau hydrophile est incorporé dans une proportion comprise entre 5 et 30% en poids.

8. Source lumineuse selon l'une quelconque des revendications 5 à 7, caractérisée en ce que le matériau hydrophile pulvérulent se présente sous la forme de grains dont la taille est inférieure à 10 microns.

Office européen
des brevets

**RAPPORT DE RECHERCHE EUROPEENNE**

Numero de la demande

EP    91 40 3209

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 108 728 (STANDARD ELEKTRIK LORENZ) <br> * le document en entier * <br> --- | 1-4 | H05B33/04 <br> H05B33/20 <br> H05B33/22 <br> C09K11/02 |
| X | GB-A-2 217 896 (THE CHERRY CORP.) <br> * page 2, ligne 1 - ligne 5; revendications 1-39 * <br> --- | 1-4 | |
| X | PATENT ABSTRACTS OF JAPAN <br> vol. 13, no. 474 (E-836)(3822) 26 Octobre 1989 <br> & JP-A-1 186 591 ( NIPPON SHEET GLASS ) 26 Juillet 1989 <br> * abrégé * <br> ----- | 1,8 | |

**DOMAINES TECHNIQUES RECHERCHES (Int. Cl.5)**

H05B
C09K

Le présent rapport a été établi pour toutes les revendications

| Lieu de la recherche | Date d'achèvement de la recherche | Examinateur |
|---|---|---|
| LA HAYE | 04 MARS 1992 | DROUOT M.C. |